# EUROPEAN PATENT APPLICATION

(11) **EP 4 228 333 A1**
(43) Date of publication of application: **16.08.2023**
(21) Application number: 20958352.5
(22) Date of filing: 23.10.2020
(51) Int. Cl.: H04W 52/02

(54) **DATA PROCESSING METHOD AND APPARATUS**

(71) Applicant: Huawei Technologies Co., Ltd., Shenzhen, Guangdong 518129 (CN)
(72) Inventor: MAO, Yingchao, Shenzhen, Guangdong 518129 (CN); CHANG, Junren, Shenzhen, Guangdong 518129 (CN); ZHANG, Liangliang, Shenzhen, Guangdong 518129 (CN); LI, Jiaojiao, Shenzhen, Guangdong 518129 (CN); FENG, Shulan, Shenzhen, Guangdong 518129 (CN)
(74) Representative: Huawei European IPR
(86) International application number: PCT/CN2020/123401
(87) International publication number: WO 2022/082770

(57) **Abstract**

This application provides a data processing method, including: receiving a first message, where the first message includes a radio resource control RRC release message with a suspend indication; and re-establishing a radio link control RLC entity of a first data radio bearer DRB, and discarding a service data unit SDU of a first packet data convergence protocol PDCP entity of the first DRB. In this case, an RLC entity of a DRB of a terminal device that supports small data transmission is re-established, and an SDU of a PDCP entity is discarded, so that the terminal device has no buffered data after entering an inactive state. Therefore, uplink resources used for small data transmission in the inactive state are not occupied, thereby avoiding affecting small data transmission in the inactive state.

## Description

### TECHNICAL FIELD

This application relates to the communication field, and more specifically, to a data processing method and apparatus.

### BACKGROUND

Research on M2M (Machine to Machine, machine to machine) communication shows that providing M2M communication on a mobile network has a potential market prospect. The M2M service poses many new requirements on a system, and small data transmission (Small Data Transmission, SDT) is an important requirement. A feature of small data transmission is applicable to a device that sends or receives a small amount of data.

However, in a communication process, when a radio access network (Radio Access Network, RAN) side determines to release a terminal device (User Equipment, UE) in a connected state, so that the terminal device enters an RRC (Radio Resource Control, RRC) inactive state, the radio access network side sends an RRC release message with a suspend indication. The terminal device receives the RRC release message with the suspend indication, and waits for 60 ms from a moment at which the RRC release message is received; or optionally, after a lower layer indicates that reception of the RRC release message has been successfully acknowledged, the UE performs an operation after receiving the RRC release message. In this case, pre-assembled packet data (or buffered data) to be initially transmitted may be formed in an RLC of DRB uplink transmission, or buffered PDCP data may exist. During small packet transmission in the inactive state, the buffered data is sent to a base station, occupying resources for normal small data transmission and affecting normal small packet transmission in the inactive state. In addition, when the terminal device initiates a connection resume process, if the terminal device has a small data packet that is not completely transmitted, and the base station responds to an RRC resume request message of the UE and sends an RRC resume message to indicate the terminal device to enter the connected state, the terminal device re-establishes an RLC and a packet data convergence protocol (Packet Data Convergence Protocol, PDCP) layer, and clears buffer data that is used for small data transmission and that is not completely transmitted. This causes a data packet loss. Therefore, a data processing method is required to resolve the foregoing existing problem.

### SUMMARY

Embodiments of this application provide a data processing method and apparatus, so that a terminal device can clear buffered data after entering an inactive state, to avoid occupying uplink resources used for small data transmission in the inactive state, and avoid affecting small data transmission in the inactive state.

According to a first aspect, a data transmission method is provided. The method includes: receiving a first message, where the first message includes a radio resource control RRC release message with a suspend indication; and re-establishing a radio link control RLC entity of a first data radio bearer DRB, and discarding a service data unit SDU of a first packet data convergence protocol PDCP entity of the first DRB.

Based on the foregoing technical solution, after receiving the first message, a terminal device re-establishes the RLC entity of the first DRB, and discards an SDU of a PDCP entity, so that the terminal device has no buffered data after entering an inactive state. Therefore, uplink resources used for small data transmission in the inactive state are not occupied, thereby avoiding affecting small data transmission in the inactive state.

With reference to the first aspect, in some implementations of the first aspect, an RLC entity of a signaling radio bearer SRB 1 and an RLC entity of an SRB2 are re-established; the RLC entity of the SRB2 is re-established; or RLC entities of all SRBs are re-established.

With reference to the first aspect, in some implementations of the first aspect, the first message further indicates that the first DRB is used for small data transmission.

With reference to the first aspect, in some implementations of the first aspect, it is determined, based on the first message, that the first DRB is used for the small data transmission.

With reference to the first aspect, in some implementations of the first aspect, a third message is sent. The third message includes an RRC resume request message and data of the small data transmission.

With reference to the first aspect, in some implementations of the first aspect, the first DRB is resumed.

According to a second aspect, a data processing method is provided. The method includes: receiving a third message, where the third message includes an RRC release message with a suspend indication; and discarding unsent data buffered by an RLC entity of a second DRB or data that has been sent but has not been acknowledged.

Based on the foregoing solution, after receiving the third message, a terminal device discards unsent data buffered by an RLC entity of a DRB or data that has been sent but has not been acknowledged. The foregoing data may be data that has been buffered but has not been transmitted to a media access control MAC layer, data that has been transmitted to the MAC layer but has not been acknowledged by the MAC layer, data that has been buffered but has not been transmitted to a base station, or data that has been transmitted to the base station but has not been acknowledged by the base station. This is not limited in this application. Further, the terminal device may also clear buffered data in a buffer. According to the foregoing operations, the terminal device has no buffered data, or the buffered data exists but is not to be sent. Therefore, uplink resources used for small data transmission in an inactive state are not occupied, thereby avoiding affecting small data transmission in the inactive state.

With reference to the second aspect, in some implementations of the second aspect, an SDU of a PDCP entity of the second DRB is discarded.

With reference to the second aspect, in some implementations of the second aspect, a running timer of the RLC entity of the second DRB is stopped or reset.

With reference to the second aspect, in some implementations of the second aspect, an RLC entity of an SRB 1 and an RLC entity of an SRB2 are re-established; the RLC entity of the SRB2 is re-established; or RLC entities of SRBs are re-established.

With reference to the second aspect, in some implementations of the second aspect, the third message further indicates that the second DRB is used for small data transmission.

With reference to the second aspect, in some implementations of the second aspect, it is determined, based on the third message, that the second DRB is used for the small data transmission.

With reference to the second aspect, in some implementations of the second aspect, a fourth message is sent. The fourth message includes an RRC resume request message and data of the small data transmission.

With reference to the second aspect, in some implementations of the second aspect, the second DRB is resumed.

According to a third aspect, a data processing method is provided. The method includes: receiving a fifth message, where the fifth message is used to indicate that a third DRB is used for small data transmission; and skipping re-establishing an RLC entity of the third DRB, and skipping suspending a PDCP entity of the third DRB.

Based on the foregoing technical solution, a terminal device skips re-establishing an RLC entity of a DRB and skips suspending a PDCP entity of the DRB. If the terminal device has buffered data that is used for small data transmission and that is not completely transmitted, the buffered data used for small data transmission after the terminal device enters an inactive state may continue to be transmitted, and no packet loss occurs.

With reference to the third aspect, in some implementations of the third aspect, resetting of a status parameter of the RLC entity of the third DRB is prohibited, and running of a timer of the RLC entity of the third DRB is kept.

With reference to the third aspect, in some implementations of the third aspect, the fifth message further includes an RRC release message with a suspend indication. With reference to the third aspect, in some implementations of the third aspect, the fifth message is encrypted by using a first key.

With reference to the third aspect, in some implementations of the third aspect, a sixth message is sent. The sixth message includes an RRC resume request message, the sixth message is encrypted by using a second key, and the second key and the first key include a same K_{gNB}.

With reference to the third aspect, in some implementations of the third aspect, the third DRB is resumed; all SRBs are resumed; or the third DRB and all the SRBs are resumed.

With reference to the third aspect, in some implementations of the third aspect, the sixth message further includes data of small data transmission in the inactive state.

With reference to the third aspect, in some implementations of the third aspect, a seventh message is received. The seventh message is an RRC resume message or the fifth message, and the seventh message is encrypted by using the first key.

With reference to the third aspect, in some implementations of the third aspect, when the seventh message is the RRC resume message, the seventh message further indicates to skip re-establishing the RLC entity of the third DRB.

With reference to the third aspect, in some implementations of the third aspect, when the seventh message is the RRC resume message, the seventh message further indicates to skip re-establishing the PDCP entity of the third DRB.

With reference to the third aspect, in some implementations of the third aspect, the fifth message further includes a next hop chaining counter NCC.

According to a fourth aspect, a data processing method is provided. The method includes: receiving an eighth message, where the eighth message includes an RRC release message with a suspend indication; sending a ninth message, where the ninth message includes an RRC resume request message; and receiving a tenth message, where the tenth message is an RRC resume message and includes an indication for skipping re-establishing an RLC entity of a fourth DRB, or an indication for skipping re-establishing a PDCP entity of the fourth DRB, or an indication for skipping re-establishing the RLC entity and the PDCP entity of the fourth DRB.

Based on the foregoing solution, for a terminal device that has small data transmission in an inactive state, if the terminal device is transmitting a small data packet, or the terminal device has a subsequent small data packet to be transmitted, but in this case, a base station responds to an RRC resume request message of the terminal device and sends an RRC resume message to enable the terminal device to enter a connected state, the terminal device does not need to re-establish an RLC entity or a PDCP entity for a DRB of small data transmission. Therefore, a buffered small data packet that is not transmitted is not cleared, thereby avoiding a loss of the small data packet.

With reference to the fourth aspect, in some implementations of the fourth aspect, based on the tenth message, the RLC entity of the fourth DRB skips to be re-established, the PDCP entity of the fourth DRB skips to be re-established, or the RLC entity and the PDCP entity of the fourth DRB skip to be re-established.

With reference to the fourth aspect, in some implementations of the fourth aspect, the ninth message further includes data of small data transmission in the inactive state.

According to a fifth aspect, a data processing apparatus is provided. The apparatus includes:
a transceiver module, configured to receive a first message, where the first message includes a radio resource control RRC release message with a suspend indication; and
a processing module, configured to: re-establish an RLC entity of a first DRB, and discard a service data unit SDU of a first PDCP entity of the first DRB.

With reference to the fifth aspect, in some implementations of the fifth aspect, the processing module is further configured to: re-establish an RLC entity of an SRB1 and an RLC entity of an SRB2; re-establish the RLC entity of the SRB2; or re-establish RLC entities of all SRBs.

With reference to the fifth aspect, in some implementations of the fifth aspect, the first message further indicates that the first DRB is used for small data transmission.

With reference to the fifth aspect, in some implementations of the fifth aspect, the processing module is further configured to determine, based on the first message, that the first DRB is used for the small data transmission.

With reference to the fifth aspect, in some implementations of the fifth aspect, the transceiver module is further configured to send a second message. The second message includes an RRC resume request message and data of the small data transmission.

With reference to the fifth aspect, in some implementations of the fifth aspect, the processing module is further configured to resume the first DRB.

According to a sixth aspect, a data processing apparatus is provided. The apparatus includes:
a transceiver module, configured to receive a third message, where the third message includes an RRC release message with a suspend indication; and
a processing module, configured to discard unsent data buffered by an RLC entity of a second DRB or data that has been sent but has not been acknowledged.

With reference to the sixth aspect, in some implementations of the sixth aspect, the processing module is further configured to discard an SDU of a PDCP entity of the second DRB.

With reference to the sixth aspect, in some implementations of the sixth aspect, the processing module is further configured to: re-establish an RLC entity of an SRB 1 and an RLC entity of an SRB2; re-establish the RLC entity of the SRB2; or re-establish RLC entities of all SRBs.

With reference to the sixth aspect, in some implementations of the sixth aspect, the processing module is further configured to stop or reset a running timer of the RLC entity of the second DRB.

With reference to the sixth aspect, in some implementations of the sixth aspect, the third message further indicates that the second DRB is used for small data transmission.

With reference to the sixth aspect, in some implementations of the sixth aspect, the processing module is further configured to determine, based on the third message, that the second DRB is used for the small data transmission.

With reference to the sixth aspect, in some implementations of the sixth aspect, the transceiver module is further configured to send a fourth message. The fourth message includes an RRC resume request message and data of the small data transmission.

With reference to the sixth aspect, in some implementations of the sixth aspect, the processing module is further configured to resume the second DRB.

According to a seventh aspect, a data processing apparatus is provided. The apparatus includes:
a transceiver module, configured to receive a fifth message, where the fifth message is used to indicate that a third DRB is used for small data transmission; and
a processing module, configured to: skip re-establishing an RLC entity of the third DRB, and skip suspending a PDCP entity of the third DRB.

With reference to the seventh aspect, in some implementations of the seventh aspect, the processing module is further configured to: prohibit resetting of a status parameter of the RLC entity of the third DRB, and keep running of a timer of the RLC entity of the third DRB.

With reference to the seventh aspect, in some implementations of the seventh aspect, the fifth message further includes an RRC release message with a suspend indication.

With reference to the seventh aspect, in some implementations of the seventh aspect, the fifth message is encrypted by using a first key.

With reference to the seventh aspect, in some implementations of the seventh aspect, the transceiver module is further configured to send a sixth message. The sixth message includes an RRC resume request message, the sixth message is encrypted by using a second key, and the second key and the first key include a same K_{gNB}.

With reference to the seventh aspect, in some implementations of the seventh aspect, the processing module is further configured to: resume the third DRB; resume all SRBs; or resume the third DRB and all the SRBs.

With reference to the seventh aspect, in some implementations of the seventh aspect, the sixth message further includes data of small data transmission in an inactive state.

With reference to the seventh aspect, in some implementations of the seventh aspect, the transceiver module is further configured to receive a seventh message. The seventh message is an RRC resume message or the fifth message, and the seventh message is encrypted by using the first key.

With reference to the seventh aspect, in some implementations of the seventh aspect, when the seventh message is the RRC resume message, the seventh message further indicates to skip re-establishing the RLC entity of the third DRB.

With reference to the seventh aspect, in some implementations of the seventh aspect, when the seventh message is the RRC resume message, the seventh message further indicates to skip re-establishing the PDCP entity of the third DRB.

With reference to the seventh aspect, in some implementations of the seventh aspect, the fifth message further includes an NCC.

According to an eighth aspect, a data processing apparatus is provided. The apparatus includes:
a transceiver module, configured to: receive an eighth message, where the eighth message includes an RRC release message with a suspend indication; send a ninth message, where the ninth message includes an RRC resume request message; and receive a tenth message, where the tenth message is an RRC resume message and includes an indication for skipping re-establishing an RLC entity of a fourth DRB, or an indication for skipping re-establishing a PDCP entity of the fourth DRB, or an indication for skipping re-establishing the RLC entity and the PDCP entity of the fourth DRB; and
a processing module, configured to: skip, based on the tenth message, re-establishing the RLC entity of the fourth DRB, skip re-establishing the PDCP entity of the fourth DRB, or skip re-establishing the RLC entity and the PDCP entity of the fourth DRB.

With reference to the eighth aspect, in some implementations of the eighth aspect, the processing module is further configured to: skip, based on the tenth message, re-establishing the RLC entity of the fourth DRB, skip re-establishing the PDCP entity of the fourth DRB, or skip re-establishing the RLC entity and the PDCP entity of the fourth DRB.

With reference to the eighth aspect, in some implementations of the eighth aspect, the ninth message further includes data of small data transmission in an inactive state.

According to a ninth aspect, a data processing apparatus is provided, including a processor. The processor is coupled to a memory, and may be configured to execute instructions in the memory, to implement the communication method according to any one of the first aspect to the fourth aspect and the possible implementations of the first aspect to the fourth aspect. Optionally, the data processing apparatus further includes the memory. Optionally, the data processing apparatus further includes a communication interface, the processor is coupled to the communication interface, and the communication interface is configured to input and/or output information. The information includes at least one of the instructions and data.

In an implementation, the data processing apparatus is a network device. When the data processing apparatus is a network device, the communication interface may be a transceiver or an input/output interface.

In another implementation, the data processing apparatus is a chip or a chip system. When the data processing apparatus is a chip or a chip system, the communication interface may be an input/output interface, an interface circuit, an output circuit, an input circuit, a pin, a related circuit, or the like on the chip or the chip system. The processor may alternatively be a processing circuit or a logic circuit.

In another implementation, the data processing apparatus is a chip or a chip system configured in a network device.

Optionally, the transceiver may be a transceiver circuit. Optionally, the input/output interface may be an input/output circuit.

According to a tenth aspect, a computer-readable storage medium is provided. The computer-readable storage medium stores a computer program. When the computer program is executed by a communication apparatus, the data processing apparatus is enabled to implement the communication method according to any one of the first aspect to the fourth aspect and the possible implementations of the first aspect to the fourth aspect.

According to an eleventh aspect, a computer program product including instructions is provided. When the instructions are executed by a computer, a communication apparatus is enabled to implement the communication methods according to the first aspect to the fourth aspect.

### BRIEF DESCRIPTION OF DRAWINGS

FIG. 1 is a schematic diagram of a wireless communication system 100 applicable to an embodiment of this application;
FIG. 2 is a schematic diagram of an RRC status and state transition 200 of a terminal device applicable to an embodiment of this application;
FIG. 3 is a schematic diagram of an RRC connection release system architecture 300 applicable to an embodiment of this application;
FIG. 4 is a schematic diagram of an RRC connection resume system architecture 400 applicable to an embodiment of this application;
FIG. 5 is a schematic block diagram of a data processing method 500 applicable to an embodiment of this application;
FIG. 6 is a schematic block diagram of another data processing method 600 applicable to an embodiment of this application;
FIG. 7 is a schematic block diagram of another data processing method 700 applicable to an embodiment of this application;
FIG. 8 is a schematic block diagram of another data processing method 800 applicable to an embodiment of this application;
FIG. 9 is a schematic block diagram of a communication apparatus applicable to an embodiment of this application;
FIG. 10 is a schematic architectural diagram of a communication apparatus applicable to an embodiment of this application;
FIG. 11 is a schematic diagram of a structure of a communication apparatus applicable to an embodiment of this application; and
FIG. 12 is a schematic architectural diagram of a communication apparatus applicable to an embodiment of this application.

### DESCRIPTION OF EMBODIMENTS

The following describes technical solutions of this application with reference to the accompanying drawings.

The technical solutions in embodiments of this application are applicable to various communication systems, for example, a 5th generation (5th generation, 5G) system or an NR (New radio) system, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS).

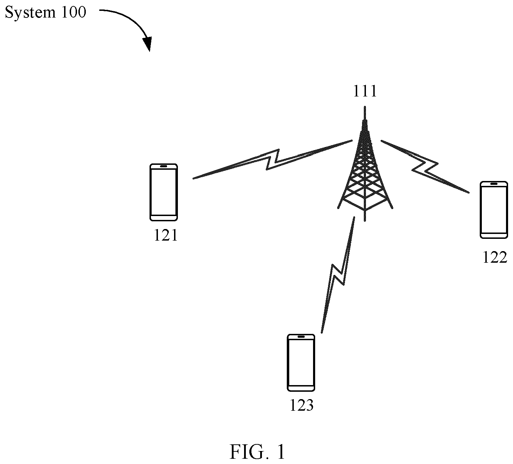

FIG. 1 is a schematic diagram of a wireless communication system 100 applicable to an embodiment of this application. As shown in FIG. 1, the wireless communication system 100 may include at least one network device, for example, a network device 111 shown in FIG. 1. The wireless communication system 100 may further include at least one terminal device, for example, a terminal device 121 to a terminal device 123 shown in FIG. 1. A plurality of antennas may be configured for each of the network device and the terminal device. The network device and the terminal device may communicate with each other by using a multi-antenna technology.

When the network device communicates with the terminal device, the network device may manage one or more cells, and there may be an integer quantity of terminal devices in one cell. Optionally, the network device 111 and the terminal device 121 to the terminal device 123 form a single-cell communication system. Without loss of generality, a cell is denoted as a cell #1. The network device 111 may be a network device in the cell #1. In other words, the network device 111 may serve a terminal device (for example, the terminal device 121) in the cell #1.

It should be noted that a cell may be understood as an area within coverage of a radio signal of the network device.

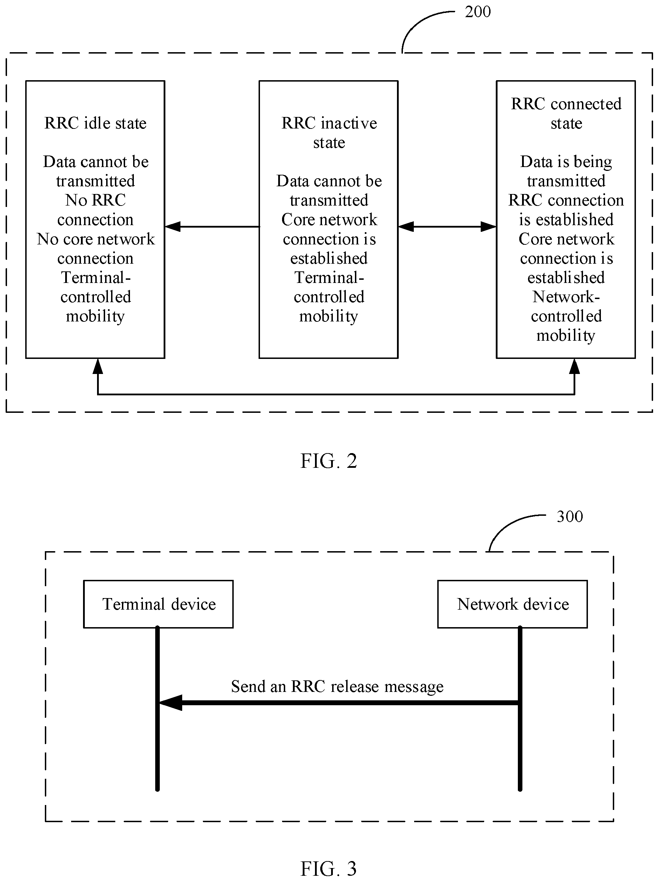

FIG. 2 is a schematic diagram of an RRC status and state transition 200 of a terminal device applicable to an embodiment of this application. As shown in FIG. 2, when the terminal device is in an RRC idle state, there is no RRC context in a radio access network, that is, there is no parameter required for communication between the terminal device and a network device. In this case, the terminal device does not belong to any cell. From a perspective of a core network, the terminal device is in an idle state. In addition, the terminal device cannot perform data transmission, has no RRC connection, and has no core network connection, and mobility processing performed by the terminal device is implemented through cell reselection. In an RRC connected state, the RRC context has been established, and all parameters required for communication between the terminal device and the radio access network are known to the terminal device and the radio access network. From the perspective of the core network, the terminal device is in a connected state. A cell to which the terminal device belongs is also known, and a terminal identifier is used for signaling between the terminal and the network. Because the RRC context has been established in the network device in the connected state, receiving or sending data is relatively fast. In this case, the terminal device has data transmission, establishes an RRC connection, establishes a core network connection, and has network-controlled mobility.

In the RRC inactive state, the RRC context remains in the terminal and the network device. The core network connection also remains unchanged. That is, from the perspective of the core network, the terminal is in a CN_CONNECTED state. Therefore, a speed of switching to the connected state to perform data transmission is fast, and core network signaling is not required. The RRC context is already in the network device, and transition from the idle state to an active state may be processed in the radio access network. In addition, a sleep manner of the terminal device is similar to a sleep manner in the idle state, and mobility processing is still performed in a cell reselection manner without network intervention.

FIG. 3 is a schematic diagram of an RRC connection release system architecture 300 applicable to an embodiment of this application. As shown in FIG. 3, when determining to release UE in a connected state to enter an RRC inactive state, a RAN side notifies a terminal device by using dedicated signaling (an RRC release message with a suspend indication). The RRC release message includes configuration information for entering the inactive state, and the inactive state-related configuration information includes the following content:
1. a radio network temporary identifier (Radio network temporary identifier, RNTI), used by a target network side to search for a base station (Next generation NodeB, gNB) before the terminal device enters the RRC inactive state and a context of the terminal device that is stored in the base station;
2. a RAN paging cycle, that is, a RAN paging cycle configured by a RAN side node for a terminal device in the inactive state;
3. a RAN notification area, which may include one or more cells;
4. timer duration for a periodic update of the RAN notification area, and a timer used to trigger the periodic update of the RAN notification area; and
5. a next hop chaining counter (NH Chaining Counter, NCC), used to calculate a security key.

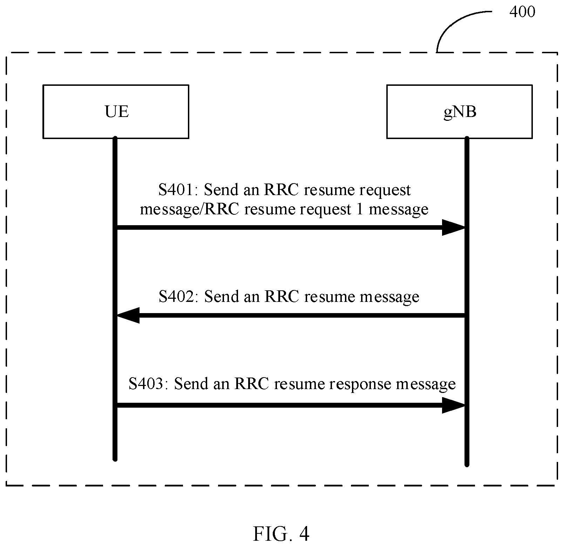

FIG. 4 is a schematic diagram of an RRC connection resume system architecture 400 applicable to an embodiment of this application. As shown in FIG. 4, when UE in an RRC inactive state tries to resume suspended RRC, an RRC connection resume process may be used. Through this process, a signaling radio bearer (Signaling radio bearer, SRB) and a DRB may be resumed, or a RAN notification area may be updated. A typical RRC resume procedure is as follows.

S401: Send an RRC resume request message/RRC resume request 1 message.

The UE sends an RRC resume request message on an SRB0. The message mainly carries an I-RNTI, a security parameter, and a resume reason of the UE.

S402: Send an RRC resume message.

A gNB replies with the RRC resume message on an SRB 1 through a downlink dedicated control channel (Downlink dedicated control Channel, DL-DCCH). The message carries configuration parameters and measurement configurations of the SRB, the DRB, and a master cell group (Master cell group, MCG).

S403: Send an RRC resume response message.

The RRC resume response message is sent on the SRB1 through a UL-DCCH. This message is mainly used for acknowledgment.

It should be understood that FIG. 1 to FIG. 4 are merely examples for description, and this application is not limited thereto.

It should be understood that the system architecture is mainly applied to a 5G NR system. This application is also applicable to a universal mobile telecommunications system (Universal mobile telecommunications system, UMTS), a code division multiple access (Code division multiple access, CDMA) system, a wireless local area network (wireless local area network, WLAN) system, or a future 5G (the fifth generation) wireless communication system, for example, a new radio (New Radio, NR) system, and evolved LTE (evolved LTE, eLTE) in a new radio access technology (New Radio Access Technology), that is, an eLTE-based access network device may be connected to both an LTE core network and a future 5G core network.

It should be understood that, in embodiments of this application, a network device may be a device that is in an access network and that communicates with and connects to a terminal over an air interface by using a sector. The network device may be configured to mutually convert a received over-the-air frame and an Internet Protocol (IP) packet and serve as a router between a terminal device and a remaining part of the access network. The remaining part of the access network may include an IP network. The network device may further coordinate attribute management of the air interface. For example, the network device may be a base station (Base transceiver station, BTS) in a global system for mobile communication (Global system for mobile communication, GSM) or CDMA, or may be a base station (NodeB) in wideband code division multiple access (Wideband Code division multiple access, WCDMA), or may be an evolved NodeB (NodeB, eNB, or e-NodeB, evolved Node B) in LTE, which is not limited herein.

It should be further understood that, in embodiments of this application, a RAN device may be an access point (ACCESS POINT, AP) in a WLAN, a base station in GSM or CDMA, a base station in WCDMA, an evolved NodeB in LTE, a relay station or an access point, a vehicle-mounted device, a wearable device, a network device in a future 5G network, a network device in a future evolved PLMN network, for example, a base station that may be connected to a 5G core network device, a transmission and reception point (Transmission and reception point, TRP), a central unit (Centralized unit, CU), a distributed unit (Distributed unit, DU), or the like.

It should be further understood that, in embodiments of this application, the terminal device in the wireless communication system may also be referred to as user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

For ease of understanding embodiments of this application, the following first briefly describes several terms in this application.

### 1. PDCP

A packet data convergence protocol layer is a second layer of a radio interface protocol stack, and processes a radio resource control (RRC) message on a control plane. The PDCP sublayer provides a signaling transmission service for upper-layer RRC, implements encryption and consistency protection for RRC signaling, and implements decryption and consistency check for RRC signaling in a reverse direction.

### 2. RRC

A radio resource control protocol layer is located at the bottom layer of a third layer of the radio interface protocol stack. The RRC sublayer is mainly used to manage and control radio resources, provide radio resource parameters for an upper layer, and control main parameters and behavior of a lower layer. The RRC sublayer plays an important role in an entire LTE-A network. RRC protocol connection control processes can be classified into the following six cases:
(1) Paging process: A network sends a paging message to UE in an RRC idle state in a cell to trigger the UE to establish an SRB 1.
(2) RRC connection establishment process: The UE establishes a connection to a base station, including establishing an SRB1.
(3) Security activation process: After the SRB1 is established, the base station activates and configures an encryption algorithm and integrity protection for the UE.
(4) RRC connection configuration process: The base station is managed, and the UE may also be triggered to perform a handover.
(5) RRC connection re-establishment process: The UE re-initiates SRB1 establishment after a radio link fault or a handover failure occurs.
(6) Release process: The UE switches to the idle state after releasing all RBs related to the base station.

There are three RRC protocol states: an idle state, an inactive state (RRC INACTIVE), and a connected state.

### 3. RLC

In a radio link control protocol, an RLC layer is located above a MAC layer and below a PDCP layer, and provides segmentation for a user and control data.

Main services and functions of the RLC sublayer depend on a transmission state, including transmission of an upper-layer PDU, PDCP independent numbering sequence (AM and UM only), error correction through ARQ (AM only), RLC SDU segmentation (AM and UM only) and re-segmentation (AM only), SDU reassembly (AM and UM only), duplicate detection (AM only), RLC SDU discarding (AM and UM only), RLC re-establishment, and protocol error detection (AM only).

### 4. SDU and PDU

There is a one-to-one correspondence between a service data unit (Service data unit, SDU) and an upper-layer protocol data unit (Protocol data unit, PDU). Data that enters each sublayer and is not processed is referred to as a service data unit (SDU). Data in a specific format after being processed by the sublayer is referred to as a protocol data unit (PDU). In addition, a PDU formed at this layer is an SDU at a next layer. The protocol data unit is sent to a specified layer of a receiving end according to data of the protocol data unit.

### 5. Small data transmission

Small data transmission (Small data transmission, SDT) refers to a transmission state in which a small data packet is transmitted. The small data packet refers to a data packet newly generated by the UE in the inactive state, and the data packet is less than a specific threshold.

Alternatively, the small data packet may be specific to a service. The foregoing service may be the following application case. For example, all data for a smart meter may be understood as small data. For a quality of service (Quality of service, QoS) requirement of a service, the service is corresponding to a DRB, and data on the DRB may be understood as a small data packet.

An application case of small data transmission, that is, a use case included in small and infrequent data traffic may be: a smartphone application, including traffic of an instant messaging service (WhatsApp, QQ, WeChat, and the like), Heart-beat/keep-alive traffic from an IM/email client and another app, and push notifications from various applications; and a non-smartphone application, including traffic of a wearable device (periodic positioning information, and the like), a sensor (an industrial wireless sensor network transmitting temperature and pressure readings periodically or in a time-based manner), a smart meter and a smart meter network sending periodic meter readings, Heart-beat/keep-alive traffic from an IM/email client and another app, and push notifications from various applications. When the UE is in the RRC inactive state, an upper layer/application layer generates a new data packet or has a data packet for small data transmission, a total amount of uplink data (or a size of a data packet) is less than a specific threshold (the threshold is a maximum threshold configured in system information), and the UE supports small data transmission, the UE initiates small data transmission. This is a meaning of initiating small data transmission.

When the base station determines to move the UE in the connected state to the inactive state, the base station triggers an RRC connection release process, and sends an RRC release message (with a suspend indication) to the UE. After receiving the RRC release message, the UE performs the following operations according to the conventional technology:
1. waiting for 60 ms from a moment at which the RRC release message is received, or optionally, after the lower layer indicates that reception of the RRC release message has been successfully acknowledged, performing, but not limited to, the following actions:
   if the RRC release message includes the suspend indication:
      resetting a MAC and releasing a default MAC cell group configuration (if any); and
      re-establishing an RLC entity for the SRB 1;
   if the RRC release message with the suspend indication is received in response to an RRC resume request message or RRC resume request 1 message:
      if a timer T319 is running, stopping the timer T319;
      in a stored UE inactive authentication server (Authentication server, AS) context:
         replacing keys K_{gNB} and K_{RRCint} with current keys K_{gNB} and K_{RRCint};
         suspending all SRBs and DRBs except the SRB0; and
         indicating the PDCP to suspend to lower layers of all DRBs;
   if the RRC release message with the suspend indication is received in response to the RRC resume request message or RRC resume request 1 message:
      if the timer T319 is running, stopping the timer T319; and
      in the stored UE inactive AS context:
         replacing keys K_{gNB} and K_{RRCint} with current keys K_{gNB} and K_{RRCint}; and
         entering RRC_INACTIVE and performing cell selection as specified in TS 38.304 [20].

According to the foregoing description, after receiving the RRC release message, the UE performs subsequent operations, including re-establishing an RLC entity of the SRB1, suspending all SRBs and DRBs except the SRB0, and indicating that PDCPs of all DRBs are suspended. Then, the UE enters the inactive state.

After receiving the RRC release message, the UE waits for 60 ms from the moment at which the RRC release message is received, or optionally, after the lower layer indicates that the reception of the RRC release message has been successfully acknowledged, the UE performs an operation after receiving the RRC release message. In this case, pre-assembled packet data to be initially transmitted at an uplink RLC of the DRB may exist, or buffered PDCP data may exist. After the release message is received, the PDCP is suspended and the RLC is re-established for the SRB1, and no processing is performed on the RLC of the DRB. Therefore, after the inactive state is entered, buffer data of the RLC of the DRB always exists. During small data packet transmission in the inactive state, the buffered data (the small data packet or another data packet) is sent to the base station, occupying resources for normal small data transmission and affecting normal small data packet transmission in the inactive state.

This application provides a solution. After the UE receives the RRC release message, RLC entities of all DRBs of the UE that supports small data transmission are re-established, so that after the UE enters the inactive state, there is no buffered data. Therefore, uplink resources used for small data transmission in the inactive state are not occupied, and small data transmission in the inactive state is not affected.

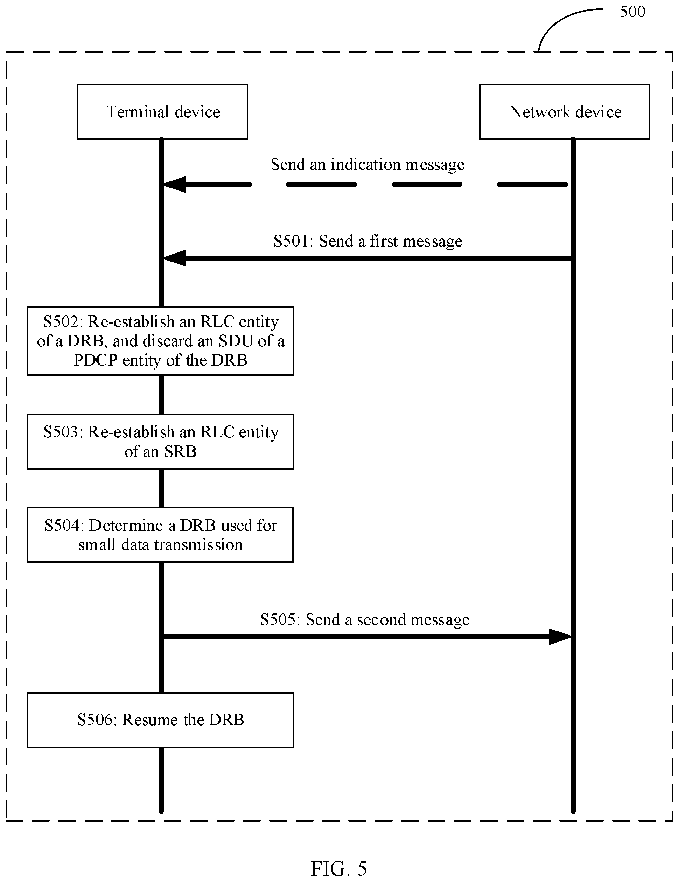

FIG. 5 is a schematic block diagram of a data processing method applicable to an embodiment of this application. The method 500 may include the following steps.

It should be understood that this embodiment may be applied to but is not limited to a scenario in which small data packet transmission and other service transmission share one DRB.

S501: Send a first message.

For example, a network device sends a first message to a terminal device. The first message includes an RRC release message with a suspend indication. It should be understood that the first message may be the RRC release message with the suspend indication, or may be another message. This is not limited in this application.

The terminal device receives the RRC release message with the suspend indication, and waits for 60 ms from a moment at which the RRC release message is received, or optionally, after a lower layer indicates that the reception of the RRC release message has been successfully acknowledged, UE performs an operation after receiving the RRC release message. In this case, pre-assembled packet data to be initially transmitted may be generated at an uplink RLC of a DRB, or buffered PDCP data may exist. After an inactive state is entered, buffered data of an RLC entity of the DRB always exists. During small packet transmission in the inactive state, the buffered data (a small data packet or another data packet) is sent to the network device, occupying resources for normal small data transmission and affecting normal small data transmission in the inactive state. Optionally, the first message is also used to indicate the terminal device to enter the inactive state.

S502: Re-establish the RLC entity of the DRB, and discard an SDU of a PDCP entity of the DRB.

For example, if the terminal device supports small data transmission in the inactive state, after receiving the first message, the terminal device re-establishes the RLC entity of the DRB based on the first message, and discards the SDU of the PDCP entity of the DRB.

Specifically, the terminal device discards SDUs, RLC SDU segments, and RLC PDUs of all RLC entities of a first DRB, stops and resets all timers, and resets all status variables to initial values, to complete an operation of re-establishing the RLC entity of the DRB. If the terminal device does not support small data transmission, the RLC entity of the first DRB does not need to be re-established. In addition, the terminal device discards the SDU of the PDCP entity of the DRB based on the first message, so that the terminal device has no buffered data after entering the inactive state.

S503: Re-establish an RLC entity of an SRB.

For example, the terminal device re-establishes an RLC entity of an SRB 1 and an RLC entity of an SRB2, or re-establishes the RLC entity of the SRB2, or re-establishes RLC entities of all SRBs, so that there is no buffered data in the RLC entity of the SRB after the terminal device enters the inactive state. For a specific operation of re-establishing the RLC entity of the SRB, refer to the operation of re-establishing the RLC entity of the DRB in S601. For brevity, details are not described herein again.

S504: Determine a DRB used for small data transmission.

For example, the terminal device determines a DRB used for small data transmission.

In a possible implementation, when a field indicating the DRB in the first message is 0, after receiving the first message, the terminal device determines, based on the first message, the DRB used for small data transmission.

In another possible implementation, before the network device sends the first message, the network device sends an indication message to the terminal device. The indication message carries an index of the DRB for small data transmission. After receiving the indication message, the terminal device determines, based on the index of the DRB for small data transmission in the indication message, the DRB used for small data transmission. The indication message may be an RRC release message or another message.

S505: Send a second message.

For example, the terminal device sends the second message to the network device. The second message includes an RRC resume request message and data of the small data transmission. In this case, the data used for small data transmission no longer includes data buffered by the terminal device before the terminal device enters the inactive state. It should be understood that the first message may be the RRC resume request message, or may be another message. This is not limited in this application.

S506: Resume the DRB.

For example, the terminal device performs a resume operation on the RLC entity and the PDPC entity of the DRB. If small data packet transmission and other service transmission share one DRB, the DRB needs to be resumed. If the small data transmission and other service transmission do not share one DRB, only the DRB used for the small data transmission is resumed, or all DRBs are resumed.

Based on the foregoing technical solution, the terminal device has no buffered data after entering the inactive state. Therefore, uplink resources used for small data transmission in the inactive state are not occupied, thereby avoiding affecting small data transmission in the inactive state.

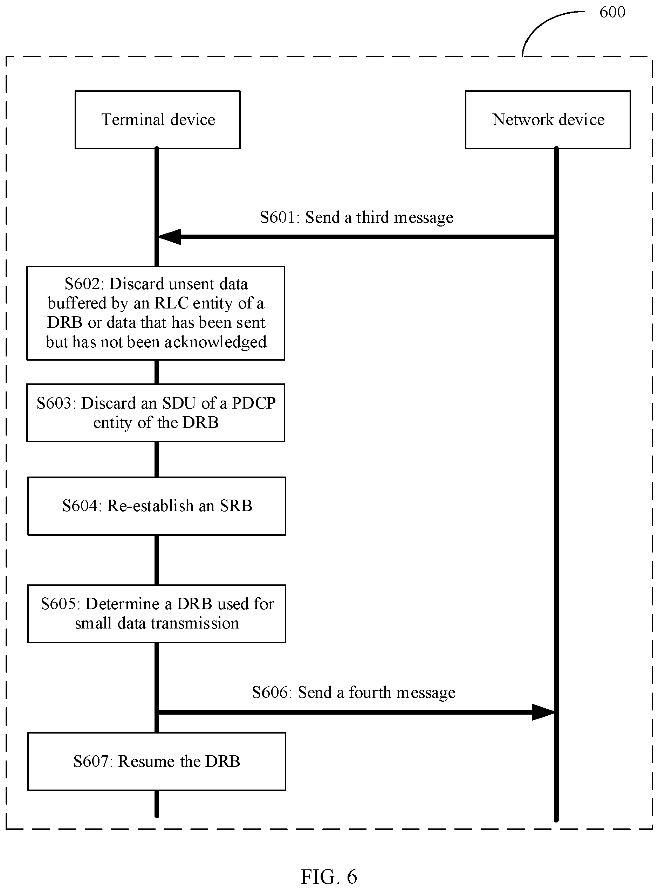

FIG. 6 is a schematic block diagram of another data processing method applicable to an embodiment of this application. The method 600 may include the following steps.

It should be understood that this embodiment may be applied to but is not limited to a scenario in which small data packet transmission and other service transmission share one DRB.

S601: Send a third message.

For example, a network device sends a third message to a terminal device. The third message includes an RRC release message with a suspend indication. It should be understood that the third message may be the RRC release message with the suspend indication, or may be another message. This is not limited in this application.

The terminal device receives the RRC release message with the suspend indication, and waits for 60 ms from a moment at which the RRC release message is received, or optionally, after a lower layer indicates that the reception of the RRC release message has been successfully acknowledged, UE performs an operation after receiving the RRC release message. In this case, pre-assembled packet data to be initially transmitted may be generated at an uplink RLC of a DRB, or buffered PDCP data may exist. After an inactive state is entered, buffered data of an RLC entity of the DRB always exists. During small packet transmission in the inactive state, the buffered data (a small data packet or another data packet) is sent to the network device, occupying resources for normal small data transmission and affecting normal small data transmission in the inactive state. In a possible implementation, the first message is also used to indicate the terminal device to enter the inactive state. Optionally, a fourth message is also used to indicate the terminal device to enter the inactive state.

S602: Discard unsent data buffered by the RLC entity of the DRB or data that has been sent but has not been acknowledged.

For example, after receiving the fourth message, the terminal device discards the unsent data buffered by the RLC entity of the DRB or the data that has been sent but has not been acknowledged.

Specifically, if the terminal device supports small data transmission in the inactive state, the terminal device discards the unsent data buffered by the RLC entity and the data that has been sent but has not been acknowledged, and further stops or resets a running timer of the RLC entity of the DRB. The foregoing data may be data that has been buffered but has not been transmitted to a media access control MAC layer, data that has been transmitted to the MAC layer but has not been acknowledged by the MAC layer, data that has been buffered but has not been transmitted to a base station, or data that has been transmitted to the base station but has not been acknowledged by the base station. This is not limited in this application. Further, the terminal device may also clear buffered data in a buffer.

S603: Discard an SDU of a PDCP entity of the DRB.

For example, the terminal device discards the SDU of the PDCP entity of the DRB, so that the terminal device has no buffered data after entering the inactive state.

S604: Re-establish an SRB.

For example, the terminal device re-establishes an RLC entity of an SRB 1 and an RLC entity of an SRB2, or re-establishes the RLC entity of the SRB2, or re-establishes RLC entities of all SRBs, so that there is no buffered data in the RLC entity of the SRB after the terminal device enters the inactive state. For a specific operation of re-establishing the RLC entity of the SRB, refer to the operation of re-establishing the RLC entity of the DRB in S601. For brevity, details are not described herein again.

S605: Determine a DRB used for small data transmission.

For example, the terminal device determines a DRB used for small data transmission.

In a possible implementation, when a field indicating the DRB in the third message is 0, after receiving the third message, the terminal device may determine, based on the third message, the DRB used for small data transmission.

In another possible implementation, the network device sends an indication message to the terminal device. The indication message carries an index of the DRB for small data transmission. After receiving the indication message, the terminal device determines, based on the index of the DRB for small data transmission in the indication message, the DRB used for small data transmission. The indication message may be an RRC release message or another message.

S606: Send the fourth message.

For example, the terminal device sends the fourth message to the network device. The fourth message includes an RRC resume request message and data of the small data transmission. In this case, the data used for small data transmission no longer includes data buffered by the terminal device before the terminal device enters the inactive state. It should be understood that the fourth message may be the RRC resume request message, or may be another message. This is not limited in this application.

S607: Resume the DRB.

For example, the terminal device performs a resume operation on the RLC entity and the PDPC entity of the DRB. If small data packet transmission and other service transmission share one DRB, when one DRB is shared but there are different QoS flows, the indicated DRB needs to be resumed; or when one DRB is shared and there is a same QoS flow, the DRB needs to be resumed. If the small data transmission and other service transmission do not share one DRB, only the DRB used for the small data transmission is resumed, or all DRBs are resumed.

Based on the foregoing solution, the terminal device has no buffered data, or the buffered data exists but is not to be sent. Therefore, uplink resources used for small data transmission in the inactive state are not occupied, thereby avoiding affecting small data transmission in the inactive state.

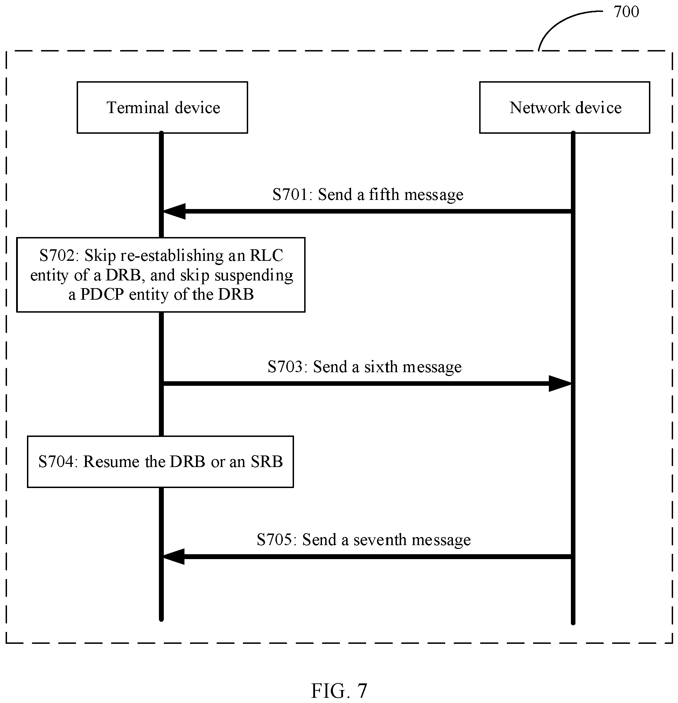

FIG. 7 is a schematic block diagram of another data processing method applicable to an embodiment of this application. The method 700 may include the following steps.

It should be understood that this embodiment may be applied to but is not limited to a scenario in which small data packet transmission does not share one DRB with other service transmission, that is, a scenario in which a separate DRB is configured for small data packet transmission.

S701: Send a fifth message.

For example, a network device sends a fifth message to a terminal device. The fifth message is used to indicate that a third DRB is used for small data transmission. Further, the fifth message may also include an RRC release message with a suspend indication. It should be understood that the fifth message may be the RRC release message with the suspend indication, or may be another message. This is not limited in this application.

After the terminal device receives the RRC release message with the suspend indication, the terminal device resets a MAC layer and releases a default MAC cell group configuration. Further, the fifth message is encrypted by using a first key. The first key is a key maintained in a context on a terminal side, and the key may include K_{gNB}.

S702: Skip re-establishing an RLC entity of a DRB, and skip suspending a PDCP entity of the DRB.

For example, after receiving the fifth message, the terminal device skips the step of re-establishing the RLC entity of the DRB, and skips the step of suspending the PDCP entity of the DRB.

In a possible implementation, the terminal device skips re-establishing the RLC entity of the DRB, to be specific, does not stop or reset all timers, and does not reset all status variables to initial values, to complete an operation of skipping re-establishing the RLC entity of the DRB. In addition, the terminal device skips suspending the PDCP entity of the DRB, to be specific, does not stop or reset a timer of the PDCP entity, and does not initialize status variables of a control transmission and reception operation of the PDCP entity, to complete an operation of skipping suspending the PDCP entity of the DRB.

In another possible implementation, the terminal device skips re-establishing the RLC entity of the DRB, to be specific, keeps all timers running and keeps all status variables not reset, to complete an operation of skipping re-establishing the RLC entity of the DRB. In addition, the terminal device skips suspending the PDCP entity of the DRB, to be specific, keeps status variables of a control transmission and reception operation of the PDCP entity of the DRB not reset, and keeps a timer of the PDCP entity running, to complete an operation of skipping suspending the PDCP entity of the DRB.

It should be understood that after receiving the fifth message, the terminal device does not update the key, and the terminal side still keeps the current key active and valid.

S703: Send a sixth message.

For example, the terminal device sends a sixth message. The sixth message includes an RRC resume request message, the sixth message is encrypted by using a second key, the second key and the first key include a same K_{gNB}, the second key is a key maintained in a context on a network side, and the key may include K_{gNB}. Further, the sixth message also includes data used for small data transmission of the terminal device in the inactive state. It should be understood that the sixth message may be the RRC resume request message, or may be another message. This is not limited in this application.

S704: Resume the DRB or an SRB.

For example, the terminal device resumes the DRB, or resumes all SRBs, or resumes both the DRB and all the SRBs. Optionally, the terminal device resumes only a DRB and an SRB that are used for small data transmission, to continue to send a previously buffered small data packet and a new small data packet. If the terminal device has established a DRB used for small data transmission and a QoS flow of the DRB when the terminal device is in a connected state, the DRB is resumed. If the terminal device has not established a related DRB when the terminal device is in the connected state, the DRB used for small data transmission needs to be established.

S705: Send a seventh message.

For example, the network device sends a seventh message to the terminal device. The seventh message is an RRC resume message or the fifth message, and the seventh message is encrypted by using the first key. It should be understood that the seventh message may be the RRC resume request message, or may be another message. This is not limited in this application.

In a possible implementation, when the seventh message is the RRC resume message, the seventh message further indicates to skip re-establishing the RLC entity of the DRB.

Specifically, the seventh message indicates to skip re-establishing the RLC entity of the DRB by setting a field about re-establishing the RLC entity of the DRB to false (false), that is, not re-establishing the RLC entity of the DRB during a connection resume process.

In another possible implementation, when the seventh message is the RRC resume message, an eighth message further indicates to skip re-establishing the PDCP entity of the DRB.

Specifically, the seventh message indicates to skip re-establishing the PDCP entity of the DRB by setting a field about re-establishing the PDCP entity of the DRB to false (false), that is, not re-establishing the PDCP entity of the DRB during a connection resume process.

In another possible implementation, when the seventh message is the fifth message, that is, the seventh message is the RRC release message that includes the suspend indication, and indicates the terminal device to re-enter the inactive state, optionally, the message carries a latest next hop chaining counter NCC, but a key update operation is not performed, and optionally, steps S701 to S705 may be repeated.

It should be understood that, when S701 to S705 are repeated, or when next small data transmission is performed, serial numbers of small data transmission are consecutive. For example, a serial number of next small data transmission is a serial number of previous small data transmission plus 1, and a serial number of a current key stream is determined based on the serial number of previous small data transmission.

It should be further understood that, in this embodiment, security update is not performed on the key, and the terminal device receives the fifth message and the seventh message by using the same first key, and sends the sixth message by using the second key. The first key and the second key include the same K_{gNB}. The network device sends an I-RNTI, a Resume MAC-I, and a PCI and frequency information of a current cell to an anchor gNB. The anchor gNB searches for context information of the terminal device based on the I-RNTI, exports a Resume MAC-I in the same way as that of the terminal device, and compares the Resume MAC-I with the received Resume MAC-I to verify the RRC resume request. After the verification succeeds, the anchor gNB sends the old access stratum root key K_{gNB} and the context information (including security context information) of the terminal device to the current network device.

It should be further understood that, in an execution process of this embodiment, control plane processing of the terminal device is similar to that in the inactive state, and processing such as measurement, discontinuous reception (Discontinuous reception, DRX), paging, and mobility management (including autonomous cell selection and reselection of the terminal device) of the terminal device is consistent with that in the inactive state. However, user plane data transmission is similar to data transmission in the connected state. The PDCP entity is not suspended, the RLC entity is not re-established, and the security key is not updated, so that validity and activation of the key are maintained. Operations and processing in this state are beneficial to both energy saving and data transmission, that is, energy saving can be better achieved, and data continuity can be maintained.

Based on the foregoing solution, if the terminal device has buffered data that is used for small data transmission and that is not completely transmitted, the buffered data used for small data transmission after the terminal device enters the inactive state may continue to be transmitted, and no packet loss occurs. In addition, the key is not updated, which simplifies security update measures. In addition, by setting the field about re-establishing the RLC entity of the DRB to false, or setting the field about re-establishing the PDCP entity of the DRB to false, the terminal device does not need to re-establish the RLC entity and the PDCP entity for the DRB for small data transmission. Therefore, a buffered small data packet that is not transmitted is not cleared, thereby avoiding a loss of the small data packet.

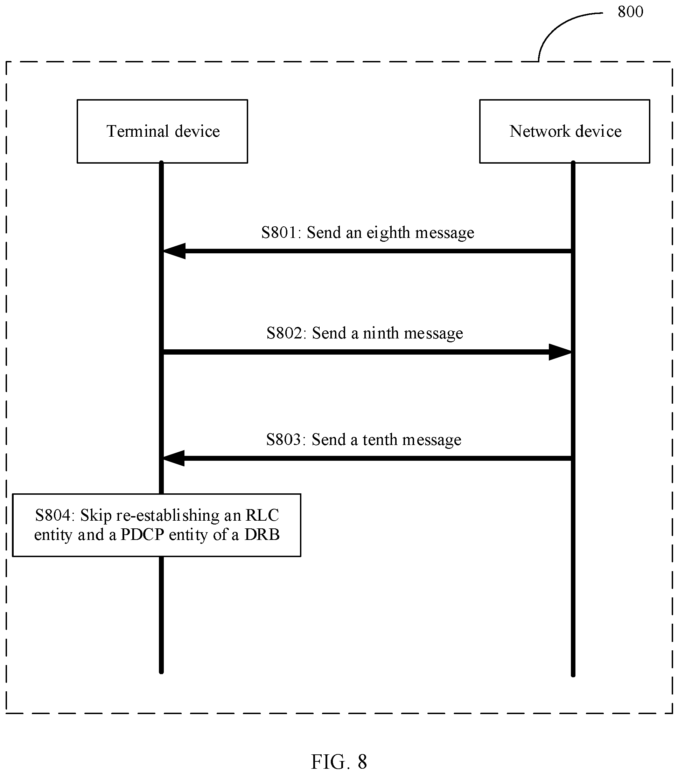

FIG. 8 is a schematic block diagram of another data processing method applicable to an embodiment of this application. The method 800 may include the following steps.

S801: Send an eighth message.

For example, a network device sends an eighth message to a terminal device. The eighth message includes an RRC release message with a suspend indication. After receiving the eighth message, the terminal device enters an inactive state. It should be understood that the eighth message may be the RRC release message with the suspend indication, or may be another message. This is not limited in this application.

S802: Send a ninth message.

For example, the terminal device sends a ninth message to the network device. The ninth message includes an RRC resume request message. Further, the ninth message may further include data used for small data transmission of the terminal device in the inactive state. It should be understood that the ninth message may be the RRC resume request message, or may be another message. This is not limited in this application.

S803: Send a tenth message.

For example, the network device sends a tenth message to the terminal device. The tenth message is an RRC resume message. Further, the tenth message may be used to indicate to skip re-establishing an RLC entity of a DRB and skip re-establishing a PDCP entity of the DRB. It should be understood that the tenth message may be the RRC resume message, or may be another message. This is not limited in this application.

Specifically, the tenth message indicates to skip re-establishing the RLC entity of the DRB by setting a field about re-establishing the RLC entity of the DRB to false (false), that is, not re-establishing the RLC entity of the DRB during a connection resume process; and the tenth message indicates to skip re-establishing the PDCP entity of the DRB by setting a field about re-establishing the PDCP entity of the DRB to false (false), that is, not re-establishing the PDCP entity of the DRB during a connection resume process.

S804: Skip re-establishing the RLC entity and the PDCP entity of the DRB.

For example, after receiving the tenth message, the terminal device skips the step of re-establishing the RLC entity and the PDCP entity of the DRB. For descriptions of skipping re-establishing the RLC entity and the PDCP entity of the DRB, refer to the descriptions in step S702. For brevity, details are not described herein again.

Based on the foregoing solution, for the terminal device that has small data transmission in the inactive state, if the terminal device is transmitting a small data packet, or the terminal device has a subsequent small data packet to be transmitted, but in this case, a base station responds to the RRC resume request message of the terminal device and sends the RRC resume message to enable the terminal device to enter a connected state, the terminal device does not need to re-establish the RLC entity and the PDCP entity for the DRB of small data transmission. Therefore, a buffered small data packet that is not transmitted is not cleared, thereby avoiding a loss of the small data packet.

Embodiments described in this specification may be independent solutions, or may be combined based on internal logic. These solutions all fall within the protection scope of this application.

It may be understood that, in the foregoing method embodiments, the methods and the operations implemented by the terminal device may alternatively be implemented by a component (for example, a chip or a circuit) used in the terminal device, and the methods and the operations implemented by the network device may alternatively be implemented by a component (for example, a chip or a circuit) used in the network device.

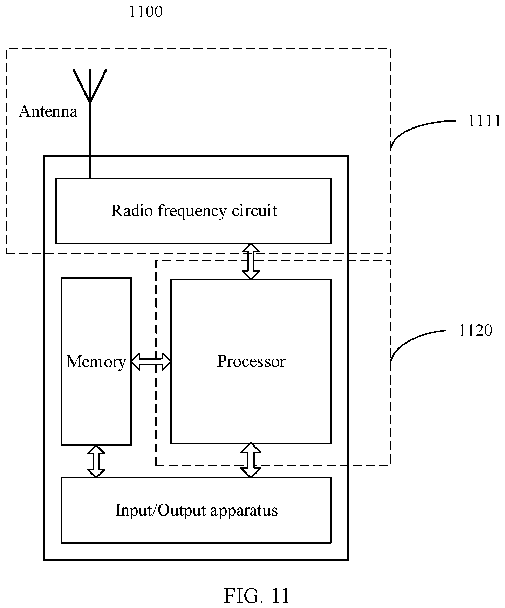

The methods provided in embodiments of this application are described above in detail with reference to FIG. 5 to FIG. 8. The following describes in detail communication apparatuses provided in embodiments of this application with reference to FIG. 8 and FIG. 11. It should be understood that descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between network elements. It may be understood that, to implement the foregoing functions, each network element such as a transmitting end device or a receiving end device includes a corresponding hardware structure and/or software module for performing each function. A person skilled in the art should be able to be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, function module division may be performed on the transmitting end device or the receiving end device based on the foregoing method example. For example, each function module may be obtained through division corresponding to each function, or two or more functions may be integrated in one processing module. The integrated module may be implemented in a form of hardware, or may be implemented in a form of a software function module. It should be noted that, in embodiments of this application, module division is an example, and is merely a logical function division. In actual implementation, another division manner may be used. An example in which each functional module is obtained through division based on each corresponding function is used below for description.

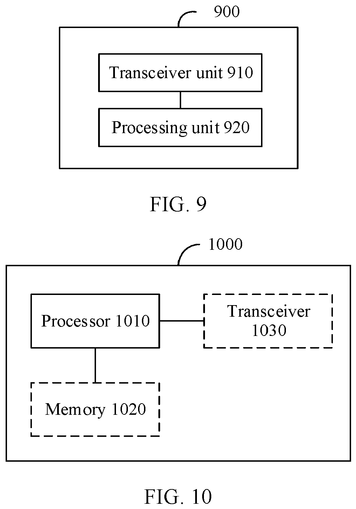

FIG. 9 is a schematic block diagram of a communication apparatus according to an embodiment of this application. The communication apparatus 900 includes a transceiver unit 910 and a processing unit 920. The transceiver unit 910 may implement a corresponding communication function, and the processing unit 910 is configured to process data. The transceiver unit 910 may also be referred to as a communication interface or a communication unit.

Optionally, the communication apparatus 900 may further include a storage unit. The storage unit may be configured to store instructions and/or data. The processing unit 920 may read the instructions and/or the data in the storage unit, so that the communication apparatus implements the foregoing method embodiments.

The communication apparatus 900 may be configured to perform actions performed by the terminal device in the foregoing method embodiments. In this case, the communication apparatus 900 may be a terminal device or a component that may be configured in the terminal device. The transceiver unit 910 is configured to perform receiving/sending-related operations on a terminal device side in the foregoing method embodiments. The processing unit 920 is configured to perform processing-related operations on the terminal device side in the foregoing method embodiments.

Alternatively, the communication apparatus 900 may be configured to perform the actions performed by the network device in the foregoing method embodiments. In this case, the communication apparatus 900 may be the network device or a component that can be configured in the network device. The transceiver unit 910 is configured to perform receiving/sending-related operations on a network device side in the foregoing method embodiments. The processing unit 920 is configured to perform processing-related operations on the network device side in the foregoing method embodiments.

In an example, the communication apparatus 900 is configured to perform actions performed by the terminal device in the embodiment shown in FIG. 5. The transceiver unit 910 is configured to perform S501 and S505, and the processing unit 920 is configured to perform S502, S503, S504, and S506.

In another example, the communication apparatus 900 is configured to perform actions performed by the terminal device in the embodiment shown in FIG. 6. The transceiver unit 910 is configured to perform S601 and S606, and the processing unit 920 is configured to perform S602, S603, S604, S605, and S607.

In still another example, the communication apparatus 900 is configured to perform actions performed by the terminal device in the embodiment shown in FIG. 7. The transceiver unit 910 is configured to perform S701, S703, and S705, and the processing unit 920 is configured to perform S702 and S704.

In still another example, the communication apparatus 900 is configured to perform actions performed by the terminal device in the embodiment shown in FIG. 8. The transceiver unit 910 is configured to perform S801, S802, and S803, and the processing unit 920 is configured to perform S804.

The communication apparatus 900 may implement a step or a procedure performed by the terminal device in the method 500, the method 600, the method 700, and the method 800 according to embodiments of this application. The communication apparatus 900 may include a unit configured to perform a method performed by the terminal device in the method 500 in FIG. 5, the method 600 in FIG. 6, the method 700 in FIG. 7, and the method 800 in FIG. 8. In addition, the units in the communication apparatus 900 and the foregoing other operations and/or functions are intended to implement corresponding procedures of the method 500 in FIG. 5, the method 600 in FIG. 6, the method 700 in FIG. 7, and the method 800 in FIG. 8.

When the communication apparatus 900 is configured to perform the method 500 in FIG. 5, the transceiver unit 910 may be configured to perform steps S501 and S505 in the method 500.

When the communication apparatus 900 is configured to perform the method 600 in FIG. 6, the transceiver unit 910 may be configured to perform steps S601 and S606 in the method 600.

When the communication apparatus 900 is configured to perform the method 700 in FIG. 7, the transceiver unit 910 may be configured to perform steps S701, S703, and S705 in the method 700.

When the communication apparatus 900 is configured to perform the method 800 in FIG. 8, the transceiver unit 910 may be configured to perform steps S801, S802, and S803 in the method 800.

It should be understood that a specific process in which the units perform the foregoing corresponding steps is described in detail in the foregoing method embodiments, and for brevity, details are not described herein.

In an example, the communication apparatus 900 is configured to perform actions performed by the network device in the embodiment shown in FIG. 5. The transceiver unit 910 is configured to perform S501 and S505.

In another example, the communication apparatus 900 is configured to perform actions performed by the network device in the embodiment shown in FIG. 6. The transceiver unit 910 is configured to perform S601 and S606.

In still another example, the communication apparatus 900 is configured to perform actions performed by the network device in the embodiment shown in FIG. 7. The transceiver unit 910 is configured to perform S701, S703, and S705.

In still another example, the communication apparatus 900 is configured to perform actions performed by the network device in the embodiment shown in FIG. 8. The transceiver unit 910 is configured to perform S801, S802, and S803.

The communication apparatus 900 may implement a step or a procedure performed by the network device in the method 500, the method 600, the method 700, and the method 800 according to embodiments of this application. The communication apparatus 900 may include a unit configured to perform a method performed by the network device in the method 500 in FIG. 5, the method 600 in FIG. 6, the method 700 in FIG. 7, and the method 800 in FIG. 8. In addition, the units in the communication apparatus 900 and the foregoing other operations and/or functions are intended to implement corresponding procedures of the method 500 in FIG. 5, the method 600 in FIG. 6, the method 700 in FIG. 7, and the method 800 in FIG. 8.

The processing unit 920 in the foregoing embodiment may be implemented by at least one processor or a processor-related circuit. The transceiver unit 910 may be implemented by using a transceiver or a transceiver-related circuit. The transceiver unit 910 may also be referred to as a communication unit or a communication interface. The storage unit may be implemented by using at least one memory.

As shown in FIG. 10, an embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or data stored in the memory 1020, so that the methods in the foregoing method embodiments are performed.

Optionally, the communication apparatus 1000 includes one or more processors 1010.

Optionally, as shown in FIG. 10, the communication apparatus 1000 may further include the memory 1020.

Optionally, the communication apparatus 1000 may include one or more memories 1020.

Optionally, the memory 1020 and the processor 1010 may be integrated or disposed separately.

Optionally, as shown in FIG. 10, the communication apparatus 1000 may further include a transceiver 1030, and the transceiver 1030 is configured to receive and/or send a signal. For example, the processor 1010 is configured to control the transceiver 1030 to receive and/or send a signal.

In a solution, the communication apparatus 1000 is configured to implement operations performed by the terminal device in the foregoing method embodiments.

For example, the processor 1010 is configured to implement processing-related operations performed by the terminal device in the foregoing method embodiments, and the transceiver 1030 is configured to implement receiving/sending-related operations performed by the terminal device in the foregoing method embodiments.

In another solution, the communication apparatus 1000 is configured to perform the operations performed by the network device in the foregoing method embodiments.

For example, the processor 1010 is configured to perform processing-related operations performed by the network device in the foregoing method embodiments, and the transceiver 1030 is configured to perform receiving/sending-related operations performed by the network device in the foregoing method embodiments.

An embodiment of this application further provides a communication apparatus 1100. The communication apparatus 1100 may be a terminal device or a chip. The communication apparatus 1100 may be configured to perform the operations performed by the terminal device in the foregoing method embodiments.

When the communication apparatus 1100 is a terminal device, FIG. 11 is a simplified schematic diagram of a structure of the terminal device. As shown in FIG. 11, the terminal device includes a processor, a memory, a radio frequency circuit, an antenna, and an input/output apparatus. The processor is mainly configured to process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to receive and send the radio frequency signal in a form of an electromagnetic wave. The input/output apparatus, such as a touchscreen, a display, or a keyboard, is mainly configured to: receive data input by a user and output data to the user. It should be noted that terminal devices of some types may have no input/output apparatus.

When data needs to be sent, after performing baseband processing on the to-be-sent data, the processor outputs the baseband signal to the radio frequency circuit; and the radio frequency circuit performs radio frequency processing on the baseband signal and then sends the radio frequency signal to outside in the form of the electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual terminal device product, there may be one or more processors and one or more memories. The memory may also be referred to as a storage medium, a storage device, or the like. The memory may be deployed independent of the processor, or may be integrated with the processor. This is not limited in this embodiment of this application.

In this embodiment of this application, the antenna and a radio frequency circuit that have a transceiver function may be considered as a transceiver unit of the terminal device, and a processor that has a processing function may be considered as a processing unit of the terminal device.

As shown in FIG. 10, the terminal device includes a transceiver unit 1110 and a processing unit 1120. The transceiver unit 1110 may also be referred to as a transceiver, a transceiver machine, a transceiver apparatus, or the like. The processing unit 1120 may also be referred to as a processor, a processing board, a processing module, a processing apparatus, or the like.

Optionally, a component that is in the transceiver unit 1110 and that is configured to implement a receiving function may be considered as a receiving unit, and a component that is in the transceiver unit 1110 and that is configured to implement a sending function may be considered as a sending unit. That is, the transceiver unit 1110 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

For example, in an implementation, the processing unit 1120 is configured to perform processing actions on a terminal device side in FIG. 5, FIG. 6, and FIG. 7. For example, the processing unit 1120 is configured to perform processing steps in steps S502, S503, S504, and S506 in FIG. 5, and the transceiver unit 1110 is configured to perform receiving and sending operations in steps S501 and S505 in FIG. 5.

For another example, in an implementation, the processing unit 1120 is configured to perform processing steps in steps S602, S603, S604, S605, and S607 in FIG. 6, and the transceiver unit 1110 is configured to perform receiving and sending operations in steps S601 and S606 in FIG. 5.

For another example, in an implementation, the processing unit 1120 is configured to perform processing steps in steps S702 and S704 in FIG. 7, and the transceiver unit 1110 is configured to perform receiving and sending operations in steps S701, S703, and S705 in FIG. 7.

For another example, in an implementation, the processing unit 1120 is configured to perform the processing step in step S804 in FIG. 8, and the transceiver unit 1110 is configured to perform receiving and sending operations in steps S801, S802, and S803 in FIG. 8.

It should be understood that FIG. 11 is merely an example instead of a limitation. The terminal device including the transceiver unit and the processing unit may not depend on the structure shown in FIG. 10.

When the communication apparatus 1100 is a chip, the chip includes a transceiver unit and a processing unit. The transceiver unit may be an input/output circuit or a communication interface. The processing unit may be a processor, a microprocessor, or an integrated circuit that is integrated on the chip.

An embodiment of this application further provides a communication apparatus 1200. The communication apparatus 1200 may be a network device or a chip. The communication apparatus 1200 may be configured to perform an operation performed by the network device in the foregoing method embodiments.

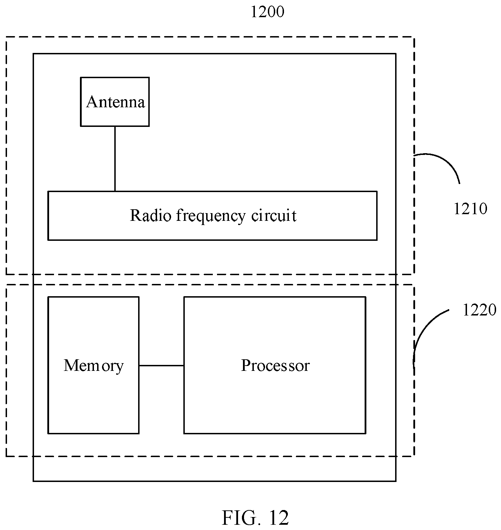

When the communication apparatus 1200 is a network device, for example, a base station, FIG. 12 is a simplified schematic diagram of a structure of the base station. The base station includes a part 1210 and a part 1220. The part 1210 is mainly configured to: send and receive a radio frequency signal, and perform conversion between the radio frequency signal and a baseband signal. The part 1220 is mainly configured to: perform baseband processing, control the base station, and the like. The part 1210 may be usually referred to as a transceiver unit, a transceiver machine, a transceiver circuit, a transceiver, or the like. The part 1220 is usually a control center of the base station, may be usually referred to as a processing unit, and is configured to control the base station to perform a processing operation on a network device side in the foregoing method embodiments.

The transceiver unit in the part 1210 may also be referred to as a transceiver machine, a transceiver, or the like. The transceiver unit includes an antenna and a radio frequency circuit. The radio frequency circuit is mainly configured to perform radio frequency processing. Optionally, a component, in the part 1210, configured to implement a receiving function may be considered as a receiving unit, and a component configured to implement a sending function may be considered as a sending unit. That is, the part 1210 includes the receiving unit and the sending unit. The receiving unit may also be referred to as a receiving machine, a receiver, a receiving circuit, or the like. The sending unit may be referred to as a transmitter machine, a transmitter, a transmitter circuit, or the like.

The part 1220 may include one or more boards, and each board may include one or more processors and one or more memories. The processor is configured to read and execute a program in the memory, to implement a baseband processing function and control a base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the transceiver unit in the part 1210 is configured to perform receiving/sending-related steps performed by the network device in the embodiment shown in FIG. 5; and the part 1220 is configured to perform processing-related steps performed by the network device in the embodiment shown in FIG. 5.

For example, in another implementation, the transceiver unit in the part 1210 is configured to perform receiving/sending-related steps performed by the network device in the embodiment shown in FIG. 6, and the part 1220 is configured to perform processing-related steps performed by the network device in the embodiment shown in FIG. 6.

For example, in still another implementation, the transceiver unit in the part 1210 is configured to perform receiving/sending-related steps performed by the network device in the embodiment shown in FIG. 7, and the part 1220 is configured to perform processing-related steps performed by the network device in the embodiment shown in FIG. 7.

For example, in still another implementation, the transceiver unit in the part 1210 is configured to perform receiving/sending-related steps performed by the network device in the embodiment shown in FIG. 8, and the part 1220 is configured to perform processing-related steps performed by the network device in the embodiment shown in FIG. 8.

It should be understood that FIG. 12 is merely an example instead of a limitation. The network device including the transceiver unit and the processing unit may not depend on the structure shown in FIG. 12.

When the communication apparatus 1200 is the chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a computer-readable storage medium. The computer-readable storage medium stores computer instructions used to implement the method performed by the terminal device or the method performed by the network device in the foregoing method embodiments.

For example, when the computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

It may be clearly understood by a person skilled in the art that, for convenience and brief description, for explanations and beneficial effects of related content in any communication apparatus provided above, refer to the corresponding method embodiment provided above. Details are not described herein again.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device, a network device, or a function module that is in a terminal device or a network device and that can invoke and execute the program.

Aspects or features of this application may be implemented as a method, an apparatus or a product that uses standard programming and/or engineering technologies. The term "product" used in this specification may cover a computer program that can be accessed from any computer-readable component, carrier or medium.

The computer-readable storage medium may be any usable medium accessible by a computer, or a data storage device, such as a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid state disk (solid state disk, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

In the several embodiments provided in this application, it should be understood that the disclosed apparatus and method may be implemented in other manners. For example, the foregoing apparatus embodiments are only examples. For example, division into the foregoing units is only logical function division, and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, function units in embodiments of this application may be integrated into one unit, or each of the units may exist alone physically, or two or more units are integrated into one unit.

All or some of the foregoing embodiments may be implemented by using software, hardware, firmware, or any combination thereof.

When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A data processing method, wherein the method comprises:
receiving a first message, wherein the first message comprises a radio resource control RRC release message with a suspend indication; and
re-establishing a radio link control RLC entity of a first data radio bearer DRB, and discarding a service data unit SDU of a first packet data convergence protocol PDCP entity of the first DRB.

2. The method according to claim 1, wherein the method further comprises at least one of the following:
re-establishing an RLC entity of a signaling radio bearer SRB1 and an RLC entity of an SRB2;
re-establishing the RLC entity of the SRB2; or
re-establishing RLC entities of all SRBs.

3. The method according to claim 1 or 2, wherein the first message further indicates that the first DRB is used for small data transmission.

4. The method according to claim 3, wherein the method further comprises:
determining, based on the first message, that the first DRB is used for the small data transmission.

5. The method according to any one of claims 1 to 4, wherein the method further comprises:
sending a second message, wherein the second message comprises an RRC resume request message and data of the small data transmission.

6. The method according to claim 5, wherein the method further comprises:
resuming the first DRB.

7. A data processing method, wherein the method comprises:
receiving a third message, wherein the third message comprises an RRC release message with a suspend indication; and
discarding unsent data buffered by an RLC entity of a second DRB or data that has been sent but has not been acknowledged.

8. The method according to claim 8, wherein the method further comprises:
discarding an SDU of a PDCP entity of the second DRB.

9. The method according to claim 7 or 8, wherein the method further comprises at least one of the following:
re-establishing an RLC entity of an SRB 1 and an RLC entity of an SRB2;
re-establishing the RLC entity of the SRB2; or
re-establishing RLC entities of all SRBs.

10. The method according to any one of claims 7 to 9, wherein the discarding unsent data buffered by an RLC entity of a second DRB or data that has been sent but has not been acknowledged comprises:
stopping or resetting a running timer of the RLC entity of the second DRB.

11. The method according to any one of claims 7 to 10, wherein the third message further indicates that the second DRB is used for small data transmission.

12. The method according to claim 11, wherein the method further comprises:
determining, based on the third message, that the second DRB is used for the small data transmission.

13. The method according to any one of claims 7 to 12, wherein the method further comprises:
sending a fourth message, wherein the fourth message comprises an RRC resume request message and data of the small data transmission.

14. The method according to claim 13, wherein the method further comprises:
resuming the second DRB.

15. A data processing method, wherein the method comprises:
receiving a fifth message, wherein the fifth message is used to indicate that a third DRB is used for small data transmission; and
skipping re-establishing an RLC entity of the third DRB, and skipping suspending a PDCP entity of the third DRB.

16. The method according to claim 15, wherein the skipping re-establishing an RLC entity of the third DRB comprises:
prohibiting resetting of a status parameter of the RLC entity of the third DRB, and keeping running of a timer of the RLC entity of the third DRB.

17. The method according to claim 15 or 16, wherein the fifth message further comprises an RRC release message with a suspend indication.

18. The method according to claim 17, wherein the fifth message is encrypted by using a first key.

19. The method according to any one of claims 15 to 18, wherein the method further comprises:
sending a sixth message, wherein the sixth message comprises an RRC resume request message, the sixth message is encrypted by using a second key, and the second key and the first key comprise a same K_{gNB}.

20. The method according to claim 19, wherein the method further comprises at least one of the following:
resuming the third DRB;
resuming all SRBs; or
resuming the third DRB and all the SRBs.

21. The method according to claim 20, wherein the sixth message further comprises data of small data transmission in an inactive state.

22. The method according to any one of claims 15 to 21, wherein the method further comprises:
receiving a seventh message, wherein the seventh message is an RRC resume message or the fifth message, and the seventh message is encrypted by using the first key.

23. The method according to claim 22, wherein when the seventh message is the RRC resume message, the seventh message further indicates to skip re-establishing the RLC entity of the third DRB.

24. The method according to claim 22, wherein when the seventh message is the RRC resume message, the seventh message further indicates to skip re-establishing the PDCP entity of the third DRB.

25. The method according to any one of claims 15 to 24, wherein the fifth message further comprises a next hop chaining counter NCC.

26. An apparatus for data transmission, comprising:
a memory, configured to store computer instructions; and
a processor, configured to execute the computer instructions stored in the memory, so that the apparatus for data transmission performs the method according to any one of claims 1 to 6, the method according to any one of claims 7 to 14, or the method according to any one of claims 15 to 25.

27. A computer-readable storage medium, wherein the computer-readable storage medium stores a computer program, and when the computer program is executed by an apparatus for data transmission, the apparatus for data transmission is enabled to perform the method according to any one of claims 1 to 6, the method according to any one of claims 7 to 14, or the method according to any one of claims 15 to 25.
